# EUROPÄISCHE PATENTSCHRIFT

(11) **EP 1 457 652 B1**
(45) Veröffentlichungstag und Bekanntmachung des Hinweises auf die Patenterteilung: **08.08.2007**
(21) Anmeldenummer: 03020322.8
(22) Anmeldetag: 09.09.2003
(51) Int. Cl.: F02D 41/04, F02N 11/08, B60K 6/04, F02N 11/04

(54) **Verfahren und Steuergerät zur Steuerung eines Verbrennungsmotors in einem Start-Stopp-Betrieb**
Method and control device for controlling an internal combustion engine in start-stop operation
Procédé et dispositif de commande pour commander le fonctionnement marche-arrêt d'un moteur à combustion interne

(30) Priorität: 10.03.2003 DE 10310301
(43) Veröffentlichungstag der Anmeldung: 15.09.2004
(73) Patentinhaber: ROBERT BOSCH GMBH, 70442 Stuttgart (DE)
(72) Erfinder: Ackermann, Manfred, 71570 Oppenweiler (DE); Rechberger, Klaus, 71638 Ludwigsburg (DE); Ahner, Peter, 71032 Boeblingen (DE)

(56) Entgegenhaltungen:
- DE-A1- 10 030 001
- US-B1- 6 499 342

## Beschreibung

Unter einem Start-Stop-Betrieb versteht man ein automatisches Abschalten und Neustarten des betriebswarmen Verbrennungsmotors, z. B. bei einem Ampel-Stop.

Zur Verringerung des Kraftstoffverbrauchs, zur Verbesserung der elektrischen Bordnetzleistung und zur Verbesserung des Startverhaltens bei Start-Stopp-Betrieb wurden in den letzten Jahren Systeme mit integrierten Starter-Generatoren auf der Kurbelwelle (ISG), sowie riemengetriebene Starter-Generatoren (RSG) entwickelt. Ein Riemen-Starter-Generator ist beispielsweise aus der DE 199 41 705 A1 bekannt.

Diese neu entwickelten Systeme besitzen im Start-Stopp-Betrieb, insbesondere bei einer 12 V-Bordnetzspannung, nur ein vergleichsweise geringes Trägheitsmoment an der Kurbelwelle, wobei sich der Vergleich auf konventionelle Startsysteme mit separaten Elektrostartern bezieht. Bei stromminimierter Auslegung des RSG oder des ISG erzielt man ferner im Vergleich zum konventionellen Startsystem nur ein verhältnismäßig kleines maximales Startmoment bei Drehzahl Null.

Beide Effekte führen zu einer starken Abhängigkeit des Startverhaltens von der Auspendel-Endposition des Verbrennungsmotors. Dabei versteht man unter der Auspendel-Endposition des Verbrennungsmotors diejenige Winkellage der Kurbelwelle, die sich im Stillstand des Verbrennungsmotors einstellt. Der Startmomentbedarf ist daher für einen ersten Zeit- und Drehwinkelbereich deutlich höher als in der anschließenden Durchdrehphase.

Abhängig von der Auspendel-Endposition des Verbrennungsmotors und der Konstruktion des Verbrennungsmotors (Diesel, Otto, Saugrohreinspritzung, Benzindirekteinspritzung, Aufbau der Drehzahl-Sensorik und des Steuergerätes) gibt es sehr unterschiedliche Drehwinkel, die vom Startsystem allein zu überwinden sind, bevor unterstützende verbrennungsmotorische Drehmomente einsetzen. Typische Drehwinkel-Werte beim heutigen Verbrennungsmotor-System sind 360° bis 540°.

Die Erfindung betrifft in diesem Zusammenhang ein Verfahren zur Steuerung eines Verbrennungsmotors in einem Start-Stopp-Betrieb, bei dem die Kurbelwelle des Verbrennungsmotors bei einem Stopp des Verbrennungsmotors durch innermotorische und/oder außermotorische Maßnahmen in einen definierten Winkelbereich gesteuert wird, aus dem heraus der Verbrennungsmotor bei einem nachfolgenden Start schneller zu starten ist.

Die Erfindung betrifft darüber hinaus ein Steuergerät für einen Verbrennungsmotor, der wenigstens einen Drehzahlgeber zur Erfassung der Drehzahl der Kurbelwelle des Verbrennungsmotors und Mittel zum Beeinflussen der potenziellen Energie des Verbrennungsmotors beim Abstellen des Verbrennungsmotors aufweist, wobei das Steuergerät den Betrieb des Verbrennungsmotors steuert. Dabei wird unter der potenziellen Energie des Verbrennungsmotors die Summe aus der Rotationsenergie seiner Wellen, der kinetischen Energie seiner Kolben und Pleuel und der Summe der Druckenergie seiner verdichteten Brennraumfüllungen verstanden.

### Stand der Technik

Ein solches Verfahren und ein solches Steuergerät sind aus der DE 100 30 001 A1 bekannt. Nach dieser Schrift wird die Kurbelwelle beim Abstellen oder nach dem Abstellen des Verbrennungsmotors in eine gewünschte vorgebbare Position gedreht. Das Drehmoment für diese Kurbelwellendrehung soll durch aktive oder passive Verstelleinrichtungen aufgebracht werden, wobei Starter, Starter-Generatoren und zusätzliche, auf die Kurbelwelle wirkende Elektromotoren, wie sie bei Hybridfahrzeugen üblich sind, als Beispiele aktiver Verstelleinrichtungen genannt werden. Alternativ sollen spezielle Zünd- und Einspritzimpulse abgegeben werden, die zu Verbrennungen in den Zylindern der Brennkraftmaschine führen, die ihrerseits gerade so viel Drehmoment erzeugen, dass sich die Brennkraftmaschine in die gewünschte Position bewegt. Als weitere Alternative wird eine variable Gaswechselventilansteuerung genannt, die bei geeigneter Ansteuerung ein Drehmoment induzieren kann.

Bei einem ersten aus dieser Schrift bekannten Verfahren wird im Nachlauf des Verbrennungsmotors, nach dem Beenden der regulären Einspritzung, der Stillstand des Motors abgewartet. Danach wird die Verstelleinrichtung aktiv angesteuert, um die Brennkraftmaschine, bzw. die Kurbelwelle der Brennkraftmaschine, in die vom Steuergerät vorgegebene gewünschte Winkelposition zu bewegen. Alternativ dazu greift die Verstelleinrichtung bereits bei noch auslaufendem Verbrennungsmotor ein und bewegt den Verbrennungsmotor in die vom Motorsteuergerät vorgegebene gewünschte Winkelposition und bringt ihn dort zum Stillstand.

Ein weiteres aus dieser Schrift bekanntes Verfahren arbeitet mittels Zündung und Einspritzung des Verbrennungsmotors, beispielsweise beim Ottomotor. Immer dann, wenn im Nachlauf durch die Beobachtung der Winkelsignale eines induktiv arbeitenden, Zähne auf einem Kurbelwellengeberrad abtastenden Drehzahlsensors absehbar wird, dass der Motor nach einem definierten Winkel zum Stehen kommen wird und dieser definierte Winkel nicht der gewünschten Auslaufposition entspricht, wird eingegriffen.

Dabei erfolgt der Eingriff nach zwei Verfahren. Um den Motor in Richtung der gewünschten Position vorwärts zu bringen, wird vor dem Verdichtungstakt eingespritzt und in der Nähe des Zündungs-Oberen-Totpunktes (ZOT) gezündet. Alternativ oder ergänzend wird dann, wenn sich die Kurbelwelle des Verbrennungsmotors kurz vor der gewünschten Position befindet, eine geringe Kraftstoffmenge eingespritzt und vor dem Zündungs-OT gezündet, so dass ein bremsender Impuls erzeugt wird. Nach einem möglichen Rückdreher soll die Kurbelwelle des Verbrennungsmotors in der gewünschten Winkelposition zum Stehen kommen.

Diese Schrift beschreibt damit qualitativ die verschiedenen Eingriffsmöglichkeiten. Sie liefert jedoch keine Hinweise darauf, wie und nach welchen Kriterien die Eingriffe bestimmt werden können. Wegen der Vielzahl möglicher Auspendelpositionen eines Verbrennungsmotors besteht jedoch ein Bedarf für eine möglichst genaue Bestimmung notwendiger Korrekturimpulse.

Vor diesem Hintergrund besteht die Aufgabe der Erfindung in der Angabe eines Verfahrens und eines Steuergerätes zur Verbesserung des Start-verhalten eines Verbrennungsmotors im Start-Stopp-Betrieb, das eine Vermeidung ungünstiger Auspendelpositionen mit einfachen, kostengünstigen Verfahren erlaubt und dabei Kriterien für eine genaue Bestimmung der vorzunehmenden Korrektureingriffe liefert.

Diese Aufgabe wird bei einem Verfahren der eingangs genannten Art dadurch gelöst, dass das Verfahren die folgenden Schritte umfasst:
a) Erfassen der Drehzahl der Kurbelwelle beim Abstellen des Verbrennungsmotors
b) Detektieren von zwei aufeinander folgenden gleichartiger Extrema der Drehzahl,
c) Berechnen eines dritten, unmittelbar auf das zweite Extremum folgenden gleichartigen Extremums,
d) Berechnen der im dritten Extremum zu erwartenden potenziellen Energie des Verbrennungsmotors,
e) Korrigieren der potenziellen Energie des Verbrennungsmotors dann, wenn die für das dritte Extremum berechnete potenzielle Energie eine ungünstige Auspendel-Endposition des Verbrennungsmotors erwarten lässt.

Hinsichtlich des Steuergerätes der eingangs genannten Art wird diese Aufgabe dadurch gelöst, dass das Steuergerät den Verbrennungsmotor nach einem solchen Verfahren steuert.

### Vorteile der Erfindung

Durch diese Merkmale wird die Aufgabe der Erfindung vollkommen gelöst. Im Einzelnen erlauben diese Merkmale eine genaue Bestimmung der ohne Korrektureingriffe zu erwartenden Auspendel-Endposition der Kurbelwelle ohne zusätzliche Sensorik, da Drehzahlgeber ohnehin für die Steuerung des Verbrennungsmotors an dessen Kurbelwelle und/oder an dessen Nockenwelle und/oder, zur Steuerung eines potenziell vorhandenen Riemen-Starter-Generators, an einer Generatorwelle vorhanden sind. Darüber hinaus wird durch diese Merkmale ein einfacher und damit kostengünstiger Analyse-Algorithmus zur Berechnung kritischer Auspendel-Endpositionen der Kurbelwelle bereitgestellt. Die notwendigen Korrektureingriffe, die zu einer Änderung der potenziellen Energie des Verbrennungsmotors führen, können sowohl als Energieentnahme als auch als Energiezufuhr realisiert werden, was zu einer erwünscht hohen Flexibilität in Bezug auf Korrektureingriffe durch Starter-Generatoren, Generatoren und/oder verbrennungsmotorische Maßnahmen führt.

Eine bevorzugte Ausgestaltung sieht vor, dass der Schritt e) die folgenden weiteren Schritte umfasst:
f) Feststellen, ob die zu erwartende potenzielle Energie in einem ersten Intervall liegt, bei dem eine günstige Auspendel-Endposition der Kurbelwelle zu erwarten ist, oder ob die potenzielle Energie in einem weiteren Intervall liegt, in dem eine ungünstige Auspendel-Endposition der Kurbelwelle zu erwarten ist, und
g) Korrigieren der potenziellen Energie des Verbrennungsmotors durch innermotorische Maßnahmen oder außermotorische Maßnahmen dann, wenn die zu erwartende potenzielle Energie des Verbrennungsmotors in dem zweiten Intervall liegt.

Diese Ausgestaltung nutzt aus, dass der oben angegebene Analyse-Algorithmus auch ein Maß für die Antriebsenergie liefert, die in einem bestimmten Drehwinkelbereich der Kurbelwelle zuzuführen ist, um die gewünschte Auspendel-Endposition zuverlässig zu ereichen.

Bevorzugt ist ferner, dass der Schritt b) dann durchgeführt wird, wenn die Drehzahl des Verbrennungsmotors einen vorgegebenen Schwellenwert unterschreitet.

Diese Ausgestaltung liefert den Vorteil, dass der Analyse-Algorithmus erst dann durchgeführt wird, wenn aufgrund der geringen Drehzahl des Verbrennungsmotors und seiner damit einhergehenden geringen potenziellen Energie innerhalb der nächsten Umdrehungen ein Stillstand des Verbrennungsmotors erwartet werden kann. Dadurch wird die Rechenkapazität des Steuergerätes nur in der kurzen Zeitspanne der letzten Umdrehungen in Anspruch genommen. Es ist ein besonderer Vorteil der Erfindung, dass der Algorithmus so einfach ist, dass die notwendigen Berechnungen problemlos in Echtzeit während dieser kurzen Zeitspanne durchgeführt werden können.

Es ist weiter bevorzugt dass die Korrektur der potenziellen Energie zwischen dem zweiten und dem dritten Minimum der Drehzahl erfolgt.

Es hat sich gezeigt, dass die Wirkung von Korrektureingriffen in diesem Drehwinkelbereich besonders gut vorher bestimmbar ist, so dass sich eine gute Dosierbarkeit und hohe Zielgenauigkeit dieser Wirkung ergibt. Prinzipiell können die Korrektureingriffe jedoch auch nach dem dritten Minimum eingesetzt werden. Die Nutzung von Minima statt Maxima nutzt in vorteilhafter Weise den Umstand, dass sich die Lage der Minima deutlicher im Drehzahlsignal abbildet als die Lage der Maxima.

Bevorzugt erfolgt die Korrektur durch einen bremsenden Energieimpuls.

Diese Ausgestaltung erlaubt in vorteilhafter Weise ein schnelles Erreichen des Stillstands des Verbrennungsmotors in einem vorbestimmten Kurbelwellenwinkelbereich. Es ist aber auch möglich, den vorbestimmten Kurbelwellenwinkelbereich mit einem beschleunigenden Energieimpuls zu ereichen.

Weiter ist bevorzugt, dass der mittlere Energieverlust zwischen zwei aufeinanderfolgenden Minima bestimmt wird und dass der Korrekturimpuls so vorbestimmt wird, dass der Absolutwert der korrigierten Energie des Verbrennungsmotors beim letzten Durchlaufen des oberen Totpunkts der Hälfte des mittleren Energieverlustes entspricht.

Diese Ausgestaltung liefert eine einfache und damit kostengünstige quantitative Bestimmung der notwendigen Korrekturimpulse. Es hat sich gezeigt, dass gerade diese übersichtliche Berechnungsvorschrift zu einem zuverlässigen Erreichen der gewünschten Auspendel-Endposition führt.

Eine weitere Ausgestaltung zeichnet sich dadurch aus, dass die Drehzahl der Kurbelwelle an einer Welle eines mit der Kurbelwelle mit bekanntem Übersetzungsverhältnis gekoppelten Starter-Generators erfasst wird.

Diese Ausgestaltung liefert den Vorteil, dass ohnehin zur Regelung und/oder Steuerung des Startergenerators vorhandene Hardware- und Software-Strukturen für die Durchführung der erfindungsgemäßen Verfahren verwendet werden können. Ähnliche Vorteile ergeben sich, wenn andere Drehzahlgeber, beispielsweise solche an der Kurbelwelle und/oder Nockenwelle des Verbrennungsmotors verwendet werden.

Bevorzugt ist auch, dass der Korrekturimpuls durch Ansteuerung eines mit der Kurbelwelle mit bekanntem Übersetzungsverhältnis gekoppelten Starter-Generators oder Generators erfolgt.

Die berechneten Korrekturimpulse lassen sich mit solchen elektrischen Maschinen besonders genau dosieren, so das sich der Vorteil einer sehr zielgenauen Dosierung der Wirkung eines Korrekturimpulses ergibt.

Eine weitere bevorzugte Ausgestaltung sieht vor, dass für den Zylinder, der sich in der Auspendel-Endposition des Verbrennungsmotors im Kompressionstakt befinden wird, vorher noch eine Einspritzung bei offenem Einlassventil des betreffenden Zylinders erfolgt.

Durch diese Maßnahme wird eine weitere Verbesserung des Startverhaltens eines Verbrennungsmotors im Start-Stopp-Betrieb erreicht, ohne dass dazu die beteiligten elektrischen Maschinen vergrößert und/oder mit größeren Phasenströmen betrieben werden müssten. Durch die Auspendelbeeinflussung nach den vorstehenden Ausgestaltungen und die Voreinspritzung wird damit eine niedrige Momentenanforderung an das Startsystem erreicht. Dadurch können auch bei Verbrennungsmotoren mit Saugrohreinspritzung verbrennungsmotorische Unterstützungsmomente bereits nach ca. 100 bis 120 Grad Kurbelwinkel ereicht werden, so dass die Zeitspannen zwischen der Auslösung eines Starts des Verbrennungsmotors bis zum Auftreten der ersten unterstützenden Drehmomentbeiträge aus Verbrennungen von 500 bis 800 ms auf 200 bis 300 ms reduziert werden. Diese Maßnahme wird auch in Verbindung mit den Merkmalen des Oberbegriffs des Anspruchs 1 als eigenständige Erfindung betrachtet, die einen Schnell-Start bei einem Start-Stopp-System ermöglicht, sofern die Schwankungsbreite der Brennraumfüllungen in engen Grenzen gehalten wird, was durch eine Begrenzung der Schwankungsbreite der Drehbeschleunigungen beim Auslauf des Verbrennungsmotors durch die Merkmale des Oberbegriffs des Anspruchs 1 möglich ist.

Bevorzugt ist weiter, dass das Steuergerät den Verbrennungsmotor nach wenigstens einer der oben genannten bevorzugten Ausgestaltungen steuert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Fig. 1: schematisch, eine Vorderansicht eines Verbrennungsmotors als Schnittdarstellung;
- Fig. 2: das technische Umfeld der Erfindung in schematischer Form mit einer ersten Anordnung eines Startergenerators;
- Fig. 3: berechnete Verläufe der Kurbelwellendrehzahl und eines Gasfedermomentes eines Verbrennungsmotors über dem Kurbelwellenwinkel beim Abstellen des Verbrennungsmotors;
- Fig. 4: Bereiche von Energiepotenzialen des Verbrennungsmotors, die zu günstigen oder ungünstigen Auspendel-Endpositionen der Kurbelwelle führen;
- Fig. 5: berechnete Verläufe der Kurbelwellendrehzahl und eines Gasfedermomentes entsprechend Fig. 3 für einen typischen Auspendelfall des Verbrennungsmotors;
- Fig. 6: berechnete zeitliche Verläufe der Drehzahl eines Verbrennungsmotors beim Start nach dem Stand der Technik und nach verschiedenen Ausgestaltungen der Erfindung; und
- Fig. 7: eine Ausgestaltung des technischen Umfeldes der Erfindung mit einer zweiten Anordnung eines Startergenerators.

### Beschreibung der Ausführungsbeispiele

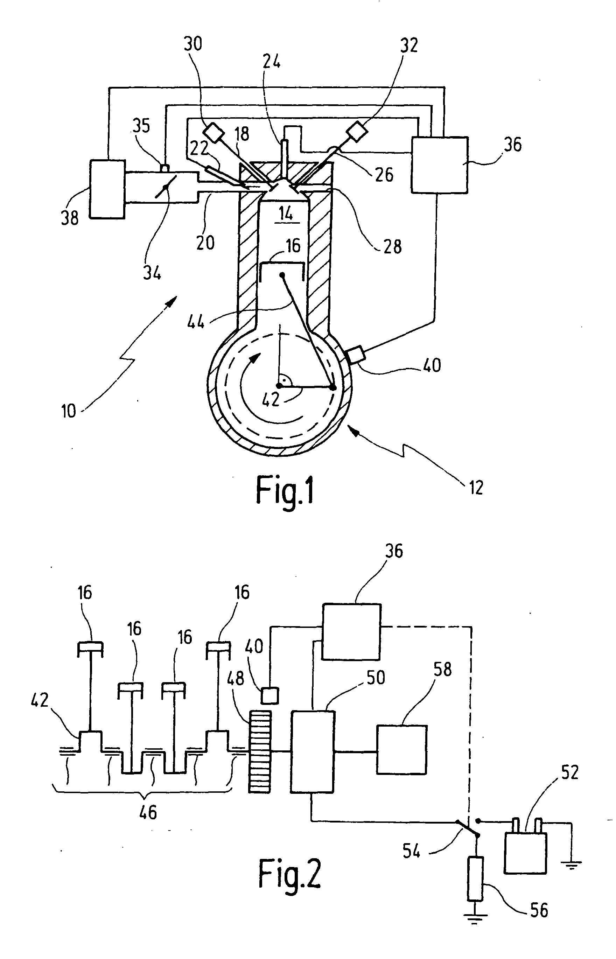

Die Ziffer 10 in der Figur 1 bezeichnet die Gesamtansicht eines Verbrennungsmotors 12 im Teilschnitt. Der Verbrennungsmotor 12 weist einen Brennraum 14 auf, der von einem Kolben 16 beweglich abgedichtet wird. Die Füllung des Brennraums 14 erfolgt bei abwärts laufendem Kolben 16 durch Ansaugen von Luft oder Kraftstoff/Luft-Gemisch über ein geöffnetes Einlassventil 18 aus einem Saugrohr 20. In der Figur 1 ist ein Einspritzventil 22 im Saugrohr 20 angeordnet, so dass sich die Darstellung der Figur 1 auf einen Verbrennungsmotor 12 mit Saugrohreinspritzung bezieht. Die Erfindung kann jedoch auch bei einem Verbrennungsmotor 12 mit direkter Einspritzung von Kraftstoff in den Brennraum 14 realisiert werden.

Das bei geschlossenem Einlassventil 18 im Brennraum 14 eingeschlossene Kraftstoff/Luft-Gemisch wird durch eine Zündkerze 24 gezündet. Die aus der Verbrennung der Brennraumfüllung resultierenden Restgase werden über ein Auslassventil 26 und eine Abgasführung 28 abgeleitet. Einlassventil 18 und Auslassventil 26 werden durch Steller 30 und 32 betätigt, die sowohl als Nockenwellen oder als vollvariable Steller auf elektromagnetischer, elektrohydraulischer oder elektropneumatischer Basis arbeiten können. Durch die Anordnung einer Zündkerze 24 und durch die Anordnung des Einspritzventils 22 entspricht die Darstellung der Figur 1 einem Ottomotor. Die Erfindung beschränkt sich aber nicht auf die Anwendung bei einem Ottomotor, sondern kann auch bei einem Dieselmotor, der keine Zündkerze 24 benötigt und bei dem der Kraftstoff direkt in den Brennraum 14 eingespritzt wird, angewendet werden.

Bei einem Ottomotor kann die Masse der Füllung des Brennraums 14 durch eine Drosselklappe 34 variiert werden, die über einen Drosselklappensteller 35 von einem Steuergerät 36 betätigt wird. Selbstverständlich ist die Erfindung aber auch bei einer Füllungssteuerung über eine variable Steuerung des Einlassventils 18 möglich. Bei der Anwendung auf einen Dieselmotor könnte auch die Drosselklappe 34 und der Drosselklappensteller 35 entfallen, da Dieselmotoren bekanntlich ungedrosselt arbeiten können.

Der Betrieb des Verbrennungsmotors 12 wird von dem Steuergerät 36 gesteuert, das dazu zumindest Signale eines Luftmassenmessers 38 und eines Drehzahlgebers 40 verarbeitet, der eine Position über die Winkellage des Kurbeltriebs aus Kurbelwelle 42 und Pleuel 44 liefert. Bei mechanischen Ventiltrieben kann alternativ oder ergänzend auch das Signal eines Nockenwellenwinkelgebers ausgewertet werden. In der Figur 1 befindet sich die Kurbelwelle 42 in einer Position von 90° nach dem Ladungswechsel - OT (oberer Totpunkt des Ladungswechsels).

Bei einem Start-Stopp-Betrieb des Verbrennungsmotors 12 hängt das Neustartverhalten des Verbrennungsmotors 12, d.h., die Geschwindigkeit, mit der die Drehzahl des Verbrennungsmotors 12 bei einem Start ansteigt, sehr stark von der Auspendel-Endposition der Kurbelwelle 42 beim vorhergehenden Abstellen des Verbrennungsmotors 12 ab. Durch statistische Untersuchungen hat sich gezeigt, dass bei betriebswarmem Verbrennungsmotor 12 Auspendel-Endstellungen der Kurbelwelle 42 in einem Bereich von 70 bis 110° nach OT, also etwa in Symmetrielage zu den oberen und unteren Totpunkten der Kolbenbewegung, mit einer Wahrscheinlichkeit von ca. 80 % auftreten. Dagegen hat sich für Auspendel-Endpostionen der Kurbelwelle 42 zwischen 20 und 70° nach OT oder zwischen 110 bis 150° nach OT eine statistische Wahrscheinlichkeit von ca.18 % gezeigt. Positionen in der Nähe der unteren und oberen Totpunkte, etwa im Bereich zwischen 150° und 200° nach OT, treten dagegen nur mit einer Wahrscheinlichkeit auf, die kleiner als ca. 2 % ist.

Es hat sich weiter gezeigt, dass bei einem Neustart, der aus Positionen im Bereich von 70 bis 110° nach OT erfolgt, vergleichsweise günstige Startbedingungen vorliegen, während bei einem Neustart aus einer Position in der Nähe des unteren oder des oberen Totpunktes ungünstigere Startbedingungen vorliegen. So hat sich gezeigt, dass bei jeweils gleich schnellem Drehzahlanstieg nach einem Start, nur 65 bis 75 % des Drehmomentes benötigt werden, das für einen Start aus einer OT/UT-Position erforderlich ist, wenn aus einer günstigeren Auspendel-Endposition der Kurbelwelle heraus gestartet wird.

Figur 2 zeigt das technische Umfeld der Erfindung, in dem günstige Auspendel-Endpositionen der Kurbelwelle 42 beim Abstellen des Verbrennungsmotors 12 eingestellt werden können. Dazu ist die in Lagern 46 gelagerte Kurbelwelle 42 in der schematisierten Seitenansicht der Figur 2 mit einem Geberrad 48 gekoppelt, das mit dem Drehzahlgeber 40 zusammenwirkt. Das Geberrad 48 weist z. B. 60 - 2 ferromagnetische Zähne auf, die von einem Induktivsensor 40 abgetastet werden. Das Ausgangssignal des Induktivsensors 40 liefert damit ein Abbild der Winkelposition der Kurbelwelle 42, dessen Feinheit von der Zahl der Zähne bestimmt wird. Die durch die zwei fehlenden Zähne definierte Lücke entspricht beispielsweise einer OT-Position der Kurbelwelle 42, die sich im Signal des Drehzahlgebers 40 abbildet und damit eine Initialisierung der Winkelbestimmung nach jeder Umdrehung der Kurbelwelle 42 gestattet. Erfindungsgemäß wird der Drehzahlverlauf beim Abstellen des Verbrennungsmotors 12 im Steuergerät 36 ausgewertet und durch Stelleingriffe so beeinflusst, dass eine für einen Neustart günstige Auspendel-Endposition der Kurbelwelle 42 erreicht wird.

Wie bereits eingangs erwähnt, kann zu diesem Zweck das Auslaufverhalten des Verbrennungsmotors 12 durch motorinterne Maßnahmen, also beispielsweise durch eine gegenüber dem Normalbetrieb veränderte Auslösung von Einspritzungen und Zündungen beeinflusst werden. Alternativ oder ergänzend können äußere Brems- und/oder Beschleunigungsmomente impulsförmig an die Kurbelwelle 42 angelegt werden.

Bei der Darstellung der Figur 2 wird zu diesem Zweck ein Startergenerator 50 vom Steuergerät 36 angesteuert. Der Startergenerator 50 lädt im Normalbetrieb eine Fahrzeugbatterie 52. Um zur Steuerung des Auslaufs des Verbrennungsmotors 12 ein definiertes Bremsmoment an die Kurbelwelle 42 anzulegen, kann beispielsweise ein Schalter 54 vorgesehen sein, der vom Steuergerät 36 betätigt wird und der den Ladestrom des Startergenerators 50 bedarfsweise über eine definierte elektrische Last, beispielsweise einen Lastwiderstand 56, abfließen lässt. Wird dagegen ein beschleunigendes Moment gewünscht, steuert Steuergerät 36 den Startergenerator 50 entsprechend an, sodass dieser nicht als Generator Drehmoment von der Kurbelwelle 42 abnimmt, sondern als Starter Drehmoment an die Kurbelwelle 42 anlegt. Zur Vervollständigung der Struktur der Figur 2 ist noch ein Block 58 dargestellt, der den übrigen Antriebstrang aus Getriebe, und nachfolgenden Wellen, bei einem Kraftfahrzeug beispielsweise die Wellen bis zu den Rädern, repräsentiert.

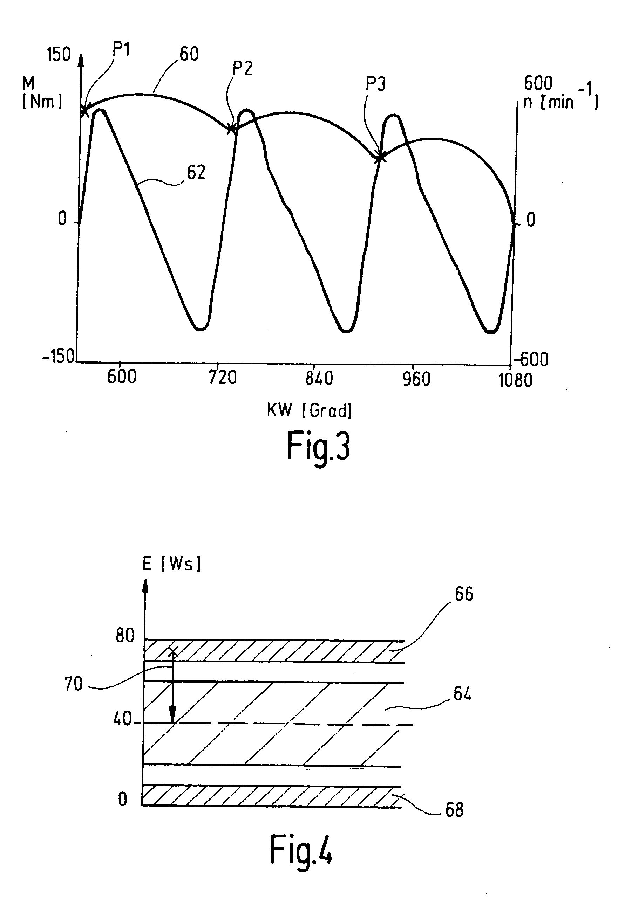

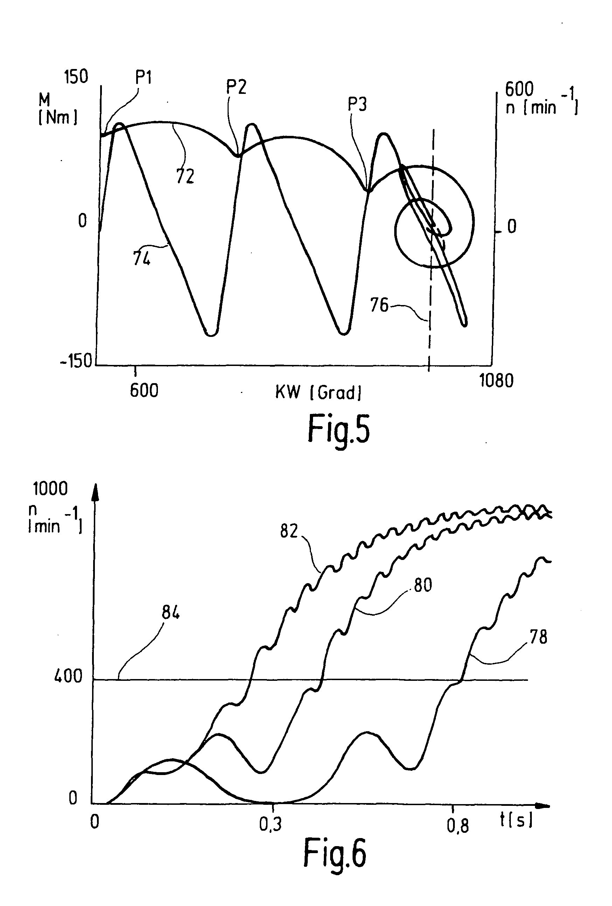

Vor einer Beschreibung des erfindungsgemäßen Verfahrens werden im Folgenden mit Bezug auf die Figur 3 physikalische Zusammenhänge zwischen dem (ohne Einspritzungen und Zündungen) beim Auslaufen des Verbrennungsmotors 12 in dessen Zylindern induzierten Gasfedermoment (Kurve 62) und dem sich dabei einstellenden Drehzahlverlauf (Kurve 60) erläutert. Dabei bezieht sich die Darstellung auf einen Vierzylinder-Viertakt-Motor, bei dem die Winkelpositionen von 540° + n * 180° mit ganzzahligem n den Totpunkten OT-Positionen oder UT-Positionen der Kurbelwelle des Motors entsprechen. Dies gilt analog für Fig. 5. Figur 3 zeigt den Ausnahmefall des Auslaufens des Verbrennungsmotors 12, in dem der Verbrennungsmotor 12 ziemlich exakt in einer OT-Stellung bei einem Drehwinkel von 1080° KW (Kurbelwellenwinkel) ohne Pendelbewegung zum Stehen kommt.

Dabei entspricht das Gasfedermoment dem Drehmoment, das von der Gasfüllung des Brennraums 14 über den Kolben 16 und Pleuel 44 auf die Kurbelwelle 42 ausgeübt wird. Dabei ist das Gasfedermoment größer als Null, wenn sich das Gas im Brennraum 14 bei abwärts laufenden Kolben 16 entspannt und den Kolben 16 antreibt. Entsprechend ist es kleiner als Null, wenn das Gas in dem Brennraum 14 durch den aufwärts laufenden Kolben 16 komprimiert wird. In den Kurbelwellenwinkelbereichen, in denen das Gasfedermoment kleiner als 0 ist, wirkt es bremsend und führt daher zu einem Abfall der Drehzahl der Kurbelwelle 42, während es in Kurbelwellenwinkelbereichen, in denen es größer als 0 ist, drehzahlsteigernd wirkt.

Im Rahmen einer Ausgestaltung der Erfindung wird der Drehzahlverlauf 60 der Kurbelwelle 42 durch den Drehzahlgeber 40 erfasst. Beim Abstellen des Verbrennungsmotors, wenn die Drehzahl unter etwa 500 Umdrehungen pro Minute fällt, werden aus dem Drehzahlverlauf 60 zwei aufeinander folgende Drehzahlminima P1 und P2 ermittelt. Bei der Auswertung solcher aufeinander folgenden Drehzahlminima P1, P2 hat sich gezeigt, dass die Differenz der Quadrate zweier aufeinander folgender Drehzahlminima ungefähr konstant bleibt. Das entsprechende Energieäquivalent kann durch die Verringerung der Rotationsenergie 0,5 x J x (ω₁² - ω₂²) und durch das Integral der Schlepp-Energie *Δϕ* x M_{Schelpp} ausgedrückt werden. Dabei beinhalten die Schleppmomente die Reibmomente und Prozessverluste des Verbrennungsmotors 12. Dabei bezeichnet M_{Schlepp} das Schleppmoment, Δϕ die Kurbelwellenwinkeldifferenz zwischen zwei aufeinander folgenden Minima P1, P2, J das Trägheitsmoment des Verbrennungsmotors 12 und ω₁ bzw. *ω₂* jeweils die Winkelgeschwindigkeiten der Kurbelwelle 42 im ersten Drehzahlminimum P1 und im zweiten Drehzahlminimum P2.

Da die Differenz der Quadrate zweier aufeinander folgender Drehzahlminima ungefähr konstant bleibt, lässt sich nach Ermittlung von zwei Drehzahlminima P1, P2 ein drittes Drehzahlminimum P3 vorausberechnen. Dabei wird das Drehzahlbeobachtungs-Fenster bevorzugt so gewählt, dass das zweite Drehzahlminimum P2 oder das dritte Drehzahlminimum P3 dem letzten OT-Durchlauf vor dem Auspendeln entspricht. Aus dem Verhältnis der potenziellen Energie des Verbrennungsmotors bei der Drehzahl des letzten OT-Durchlaufs zur Differenz der potenziellen Energien bei den Drehzahlen im vorletzten und letzten OT-Durchgang lässt sich ein Erwartungswert für die Auspendel-Endposition der Kurbelwelle 42 berechnen.

Darüber hinaus lässt sich aus dem Verhältnis der potenziellen Energie des Verbrennungsmotors 12 bei der Drehzahl des letzten OT-Durchlaufs zur Differenz der potenziellen Energie des Verbrennungsmotors 12 beim vorletzten und letzten OT-Durchgang die Energiemenge berechnen, die entweder zugeführt oder abgeführt werden muss, um eine Auspendel-Endposition der Kurbelwelle 42 in einem Kurbelwellenwinkelbereich zu erreichen, der einen nachfolgenden Neustart begünstigt. Wie bereits erwähnt, sind Bereiche um 90° nach OT, insbesondere der Bereich von 70° bis 110° nach OT, besonders günstig für einen nachfolgenden Neustart.

Das Verfahren zur Ansteuerung der optimalen Auspendel-Endlage der Kurbelwelle 42 läuft nun so ab, dass nach Ermittlung der Drehzahlen P1, P2 bereits die Drehzahl P3 vorausberechnet wird und dass bereits zwischen P2 und P3 eine ggf. notwendige Korrektur durch einen positiven oder negativen Antriebsimpuls erfolgt. Prinzipiell kann diese Korrektur aber auch noch nach dem Durchlaufen des Drehzahlminimums P3 durchgeführt werden.

Die Berechnung des ggf. notwendigen Korrekturimpulses erfolgt beispielsweise anhand der Darstellung der Figur 4, die Bereiche von Energiepotenzialen des Verbrennungsmotors 12 zeigt, die zu günstigen oder zu ungünstigen Auspendel-Endpositionen der Kurbelwelle 42 führen. Dabei markieren die fein schraffierten Bereiche 66 und 68 Energiebereiche, die ungünstig für das Erreichen der gewünschten Auspendel-Endposition sind, während der weniger fein schraffierte Bereich 64 einen Energiebereich repräsentiert, der günstig für das Erreichen der gewünschten Auspendel-Endposition der Kurbelwelle 42 ist.

Dabei beziehen sich die dargestellten Bereiche jeweils auf die potenzielle Energie des Verbrennungsmotors 12 im dritten Drehzahlminimum 3. Die Zahlenwerte in der Figur 4 haben sich am Beispiel eines bestimmten 1,8-Liter-Vier-Zylinder-Viertakt-Ottomotors ergeben. Die Energie von 80 Wattsekunden entspricht dabei der mittleren Verlustenergie zwischen zwei OT-Durchgängen dieses Verbrennungsmotors, also zwischen zwei Drehzahlminima. Das Kreuz im oberen Bereich 66 entspricht damit einem Fall, in dem die potenzielle Energie des Verbrennungsmotors 12 im Drehzahlminimum P3 etwa 76 Wattsekunden beträgt. Im Falle einer zu erwartenden Auspendel-Endposition in einer ungünstigen OT-Lage oder UT-Lage hat sich gezeigt, dass die potenzielle Energie des Verbrennungsmotors 12 im dritten Drehzahlminimum P3, also beim letzten OT-Durchgang genau der Hälfte des mittleren Energieverlustes zwischen zwei Drehzahlminima entspricht. Der Pfeil 70 entspricht in diesem Fall einem bremsenden Korrekturimpuls von etwa 35 Wattsekunden, der in diesem Fall an die Kurbelwelle 42 angelegt wird.

Durch Anlegen dieses Korrekturimpulses zwischen den Drehzahlminima P2 und P3 wird erreicht, das die potenzielle Energie des Verbrennungsmotors 12 im dritten Drehzahlminimum P3 nicht den an sich ungünstigen errechneten Erwartungswert von 76 Wattsekunden annimmt. Im Idealfall stellt sich stattdessen im Drehzahlminimum P3 aufgrund der Wirkung des genau dosierten Korrekturimpulses 70 eine potenzielle Energie von 40 Wattsekunden, also der Hälfte der mittleren Verlustenergie von 80 Wattsekunden ein. Ungünstiger, aber prinzipiell auch zielführend ist ein beschleunigender Antriebsimpuls von etwa 44 Wattsekunden. Dieser würde die Kurbelwelle 42 ebenfalls in der gewünschten Auspendel-Endposition zum Stehen bringen, dies allerdings erst eine OT-Position später.

In der Figur 5 ist der typische Fall des Auspendelns dargestellt, in dem der Verbrennungsmotor 12 nach einer erfindungsgemäßen Korrektur in einer Auspendel-Endposition von ca. 90°nach UT zum Stehen kommt, wobei dem Stillstand ein zweimaliges bis dreimaliges Pendeln vorausgeht. In der Figur 5 bezeichnet die Ziffer 72 den Drehzahlverlauf und die Ziffer 74 den Verlauf der Gasfedermomente über den Kurbelwellenwinkel. Die gestrichelte Linie 76 markiert die Stillstandsposition der Kurbelwelle 42 bei etwa 990° Kurbelwellenwinkel. Das Verfahren zur Ansteuerung der optimalen Auspendel-Endlage läuft wieder so ab, dass nach Ermittlung der Drehzahlen P1, P2 bereits die Drehzahl P3 vorausberechnet wird. Im dargestellten Fall würde die gewünschte Auspendel-Endposition auch ohne Korrekturimpuls erreicht, da sich hier nach dem gleichen Verfahren wie im Beispiel nach Figur 3 lediglich ein Antriebsimpuls von 11 Wattsekunden für die ideale Kompensation ergibt.

Ergänzend zur dargestellten Auslaufsteuerung wird im Rahmen einer Ausgestaltung der Erfindung zusätzlich noch eine Einspritzung über ein Einspritzventil 22 abgesetzt, die für den Zylinder des Verbrennungsmotors 12 bestimmt ist, der sich in der Auspendel-Endposition der Kurbelwelle 42 im Kompressionstakt befindet. Beim Auslaufen stellt sich in den letzten noch ansaugenden Zylindern eine Brennraumfüllung von etwa 60% der maximal möglichen Füllung ein. Die über das Einspritzventil 22 abgesetzte Einspritzmenge für den Zylinder, der sich im Stillstand des Verbrennungsmotors 12 im Kompressionstakt befindet, wird auf diese Füllung von etwa 60 % abgestimmt. Das entsprechende Einlassventil ist beim Auspendeln in der Ansaugphase zwischen OT und ca. 40° nach UT geöffnet. Dadurch steht bei einem anschließenden Neustart des Verbrennungsmotors 12 im Start-Stop-Betrieb eine brennfähige Brennraumfüllung zur Verfügung, die beim Neustart ohne vorheriges Ansaugen und Komprimieren direkt gezündet werden kann und durch ihre Verbrennung zu einem schnellen Drehzahlanstieg des Verbrennungsmotors 12 beim Neustart beiträgt.

In der Figur 6 sind verschiedene Drehzahlverläufe beim Neustart des Verbrennungsmotors 12 in einem Start-Stopp-Betrieb über der Zeit dargestellt. Dabei entspricht die mit der Ziffer 84 bezeichnete Linie bei etwa 400 Umdrehungen pro Minute einer typischen Startende-Drehzahl, ab der ein Verbrennungsmotor üblicherweise ohne Starterunterstützung weiter hochläuft und so selbständig seine Leerlaufdrehzahl von beispielsweise 600 bis unter 1000 Umdrehungen erreicht. Dabei entspricht die Ziffer 78 einem Neustart des Verbrennungsmotors aus einer ungünstigen Auspendel-Endposition heraus nach dem Stand der Technik. Wie aus dem Verlauf der Kurve 78 ersichtlich ist, dauert es größenordnungsmäßig 800 Millisekunden, bis der Verbrennungsmotor in diesem Fall die Startende-Drehzahl von 400 Umdrehungen pro Minute erreicht.

Startzeiten in dieser Größenordnung führen beispielsweise beim Betrieb von Kraftfahrzeugen zu Akzeptanzproblemen bei den Fahrern der Kraftfahrzeuge, sodass sich ein kraftstoffsparender Start-Stopp-Betrieb mit Startzeiten in dieser Größenordnung im täglichen Fahrbetrieb nicht ohne Weiteres realisieren lässt. Dagegen zeigt die Kurve 80 bereits einen wesentlich schnelleren Drehzahlanstieg bei einem Start des Verbrennungsmotors, bei dem die Startende-Drehzahl von etwa 400 Umdrehungen bereits nach etwa 400 Millisekunden erreicht wird. Diese Startzeit ist für einen Neustart aus einer günstigen Auspendel-Endposition der Kurbelwelle 42 erzielt worden. Mit Hilfe der Erfindung gelingt es, diesen günstigen Ausgangszustand nicht nur zufällig zu erreichen, sondern in gesteuerter, reproduzierbarer Weise weitaus öfter zu erreichen. Dadurch wird das über viele Neustarts gemittelte Startverhalten des Verbrennungsmotors 12 erheblich verbessert.

Ein weiteres Verbesserungspotenzial ergibt sich durch die im Rahmen einer Ausgestaltung dieser Erfindung vorgenommenen Einspritzung beim Auslauf des Verbrennungsmotors 12. Die Kurve 82 wurde bei einem Start mit Auslaufsteuerung und Voreinspritzung aufgenommen. Wie der Verlauf der Kurve 82 belegt, können in diesem Fall Startzeiten von unter 300 Millisekunden erreicht werden. Erfahrungsgemäß werden solche Startzeiten akzeptiert, sodass die hier vorgestellte Erfindung zur weiteren Verbreitung eines kraftstoffsparenden Start-Stopp-Betriebs von Verbrennungsmotoren beitragen kann.

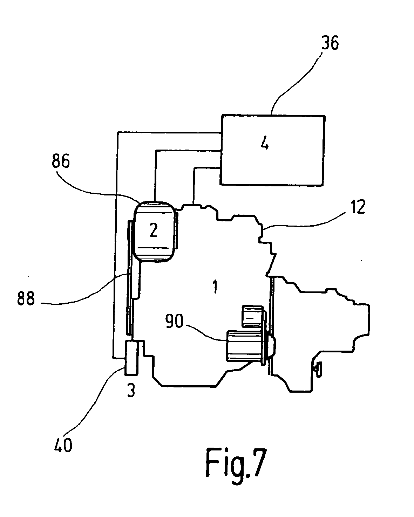

Figur 7 zeigt eine Ausgestaltung der Erfindung, bei der als Startergenerator 86 ein sogenannter Riemen-Starter-Generator verwendet wird, wie er z.B. aus der DE 199 41 705 A1 bekannt ist. Dabei werden Drehmomente zwischen Verbrennungsmotor 12 und Startergenerator 86 durch einen Treibriemen 88 übertragen. Zur Unterstützung des Startergenerators 86 im Kaltstartfall, wenn höhere Andrehmomente erforderlich sind, weist diese Ausführungsform noch einen zusätzlichen herkömmlichen Elektrostarter 90 auf.

## Patentansprüche

1. Verfahren zur Steuerung eines Verbrennungsmotors (12) in einem Start-Stop-Betrieb, bei dem die Kurbelwelle (42) des Verbrennungsmotors (12) bei einem Stop des Verbrennungsmotors (12) durch innermotorische und/oder außermotorische Maßnahmen in einen definierten Winkelbereich gesteuert wird, aus dem heraus der Verbrennungsmotor (12) bei einem nachfolgenden Start schneller zu starten ist, **dadurch gekennzeichnet, dass** das Verfahren die folgenden Schritte umfasst:
a) Erfassen der Drehzahl der Kurbelwelle (42) beim Abstellen des Verbrennungsmotors (12)
b) Detektieren von zwei aufeinander folgender gleichartiger Extrema der Drehzahl,
c) Berechnen eines dritten, unmittelbar auf das zweite Extremum folgenden gleichartigen Extremums,
d) Berechnen der im dritten Extremum zu erwartenden potenziellen Energie des Verbrennungsmotors (12),
e) Korrigieren der potenziellen Energie des Verbrennungsmotors (12) dann, wenn die für das dritte Extremum berechnete potenzielle Energie eine ungünstige Auspendel-Endposition des Verbrennungsmotors (12) erwarten lässt.

2. Verfahren nach Anspruch 1, **dadurch gekennzeichnet, dass** der Schritt e) die folgenden weiteren Schritte umfasst:
f) Feststellen, ob die zu erwartende potenzielle Energie in einem ersten Intervall liegt, bei dem eine günstige Auspendel-Endposition der Kurbelwelle (42) zu erwarten ist, oder ob die potenzielle Energie in einem zweiten Intervall liegt, in dem eine ungünstige Auspendel-Endposition der Kurbelwelle (42) zu erwarten ist,
g) Korrigieren der potenziellen Energie des Verbrennungsmotors (12) durch innermotorische Maßnahmen oder außermotorische Maßnahmen dann, wenn die zu erwartende potenzielle Energie des Verbrennungsmotors (12) in dem zweiten Intervall liegt.

3. Verfahren nach Anspruch 1 oder 2, **dadurch gekennzeichnet, dass** der Schritt b) dann durchgeführt wird, wenn die Drehzahl des Verbrennungsmotors (12) einen vorgegebenen Schwellenwert unterschreitet.

4. Verfahren nach einem der vorhergehenden Ansprüche, **dadurch gekennzeichnet, dass** die Korrektur der potenziellen Energie zwischen dem zweiten und dem dritten Minimum der Drehzahl erfolgt.

5. Verfahren nach einem der vorhergehenden Ansprüche, **dadurch gekennzeichnet, dass** die Korrektur durch einen bremsenden Energieimpuls erfolgt.

6. Verfahren nach einem der vorhergehenden Ansprüche, **dadurch gekennzeichnet, dass** der mittlere Energieverlust zwischen zwei aufeinanderfolgenden Minima bestimmt wird und dass der Korrekturimpuls so vorbestimmt wird, dass der Absolutwert der korrigierten potenziellen Energie des Verbrennungsmotors (12) beim letzten Durchlaufen des oberen Totpunktes der Hälfte des mittleren Energieverlustes entspricht.

7. Verfahren nach einem der vorhergehenden Ansprüche, **dadurch gekennzeichnet, dass** die Drehzahl der Kurbelwelle (42) an einer Welle eines mit der Kurbelwelle (42) mit bekanntem Übersetzungsverhältnis gekoppelten Starter-Generators (50; 86) erfasst wird.

8. Verfahren nach einem der vorhergehenden Ansprüche, **dadurch gekennzeichnet, dass** der Korrekturimpuls durch Ansteuerung eines mit der Kurbelwelle (42) mit bekanntem Übersetzungsverhältnis gekoppelten Starter-Generators (50; 86) oder Generators erfolgt.

9. Verfahren nach einem der vorhergehenden Ansprüche, **dadurch gekennzeichnet, dass** für den Zylinder, der sich in der Auspendel-Endposition des Verbrennungsmotors (12) im Kompressionstakt befinden wird, vorher noch eine Einspritzung bei offenem Einlassventil des betreffenden Zylinders erfolgt.

10. Steuergerät (36) für einen Verbrennungsmotor (12), der wenigstens einem Drehzahlgeber (40) zur Erfassung der Drehzahl der Kurbelwelle (42) des Verbrennungsmotors (12) und Mittel zum Beeinflussen der potenziellen Energie des Verbrennungsmotors (12) beim Abstellen des Verbrennungsmotors (12) aufweist, wobei das Steuergerät (36) den Betrieb des Verbrennungsmotors (12) steuert, **dadurch gekennzeichnet, dass** das Steuergerät (36) den Verbrennungsmotor (12) nach wenigstens einem der Verfahren nach den Ansprüchen 1 bis 9 steuert.

## Claims

1. Method for controlling an internal combustion engine (12) in a start-stop mode, in which method, when the internal combustion engine (12) is stopped, the crankshaft (42) of the internal combustion engine (12) is adjusted in a controlled fashion by means of engine-internal measures and/or engine-external measures into a defined angular range from which the internal combustion engine (12) can be started more quickly in the event of a subsequent start, **characterized in that** the method comprises the following steps:
a) measuring the rotational speed of the crankshaft (42) as the internal combustion engine (12) is switched off,
b) detecting two successive equivalent extrema of the rotational speed,
c) calculating a third, equivalent extremum directly following the second extremum,
d) calculating the potential energy of the internal combustion engine (12) to be expected in the third extremum,
e) correcting the potential energy of the internal combustion engine (12) when the potential energy calculated for the third extremum will lead to an expected unfavourable run-down end position of the internal combustion engine (12).

2. Method according to Claim 1, **characterized in that** the step e) comprises the following further steps:
f) determining whether the potential energy to be expected lies in a first interval in which a favourable run-down end position of the crankshaft (42) is to be expected, or whether the potential energy lies in a second interval in which an unfavourable run-down end position of the crankshaft (42) is to be expected,
g) correcting the potential energy of the internal combustion engine (12) by means of engine-internal measures or engine-external measures when the expected potential energy of the internal combustion engine (12) is in the second interval.

3. Method according to Claim 1 or 2, **characterized in that** the step b) is carried out if the rotational speed of the internal combustion engine (12) falls below a predefined threshold value.

4. Method according to one of the preceding claims, **characterized in that** the correction of the potential energy is carried out between the second and the third minimum of the rotational speed.

5. Method according to one of the preceding claims, **characterized in that** the correction is carried out by means of a braking energy impulse.

6. Method according to one of the preceding claims, **characterized in that** the mean energy loss is determined between two successive minima, and **in that** the corrective impulse is predetermined in such a way that the absolute value of the corrected potential energy of the internal combustion engine (12) during the final run-through of top dead centre corresponds to half of the mean energy loss.

7. Method according to one of the preceding claims, **characterized in that** the rotational speed of the crankshaft (42) is measured at a shaft of a starter-generator (50; 86) which is coupled to the crankshaft (42) with a known transmission ratio.

8. Method according to one of the preceding claims, **characterized in that** the corrective impulse is carried out by actuating a starter-generator (50; 86) or generator which is coupled to the crankshaft (42) with a known transmission ratio.

9. Method according to one of the preceding claims, **characterized in that**, for the cylinder which will be in the compression stroke in the run-down end position of the internal combustion engine (12), a further injection with the intake valve of the respective cylinder open is preliminarily carried out.

10. Control unit (36) for an internal combustion engine (12), which control unit (36) has at least one rotational speed transducer (40) for measuring the rotational speed of the crankshaft (42) of the internal combustion engine (12) and means for influencing the potential energy of the internal combustion engine (12) as the internal combustion engine (12) is switched off, with the control unit (36) controlling the operation of the internal combustion engine (12), **characterized in that** the control unit (36) controls the internal combustion engine (12) according to at least one of the methods according to Claims 1 to 9.

## Revendications

1. Procédé de commande d'un moteur à combustion interne (12) en mode de fonctionnement marche/arrêt, selon lequel on commande le vilebrequin (42) du moteur à combustion interne (12) lors d'un arrêt du moteur (12) par des mesures internes et/ou externes au moteur dans une plage angulaire définie, à partir de laquelle le moteur (12) démarrera plus rapidement lors du démarrage suivant,
**caractérisé en ce que**
le procédé comprend les étapes suivantes :
a) saisie de la vitesse de rotation du vilebrequin (42) à l'arrêt du moteur à combustion interne (12),
b) détection de deux extrema successifs de même type de la vitesse de rotation,
c) calcul d'un troisième extremum de même type, qui suit directement le second extremum,
d) calcul de l'énergie potentielle prévisible du moteur à combustion interne (12) au troisième extremum,
e) correction de l'énergie potentielle du moteur à combustion interne (12) si l'énergie potentielle calculée pour le troisième extremum laisse prévoir une position de fin de mouvement défavorable du moteur à combustion interne (12).

2. Procédé selon la revendication 1,
**caractérisé en ce que**
l'étape e) comprend les autres étapes suivantes :
f) on constate si l'énergie potentielle prévisible se situe dans un premier intervalle pour lequel on prévoit une position favorable de fin de mouvement du vilebrequin (42), ou si l'énergie potentielle se situe dans un second intervalle pour lequel on prévoit une position de fin de mouvement défavorable du vilebrequin (42), et
g) on corrige l'énergie potentielle du moteur à combustion interne (12) par des mesures internes ou externes au moteur si l'énergie potentielle prévisible du moteur à combustion interne (12) se situe dans le second intervalle.

3. Procédé selon la revendication 1 ou 2,
**caractérisé en ce qu'**
on exécute l'étape b) si la vitesse de rotation du moteur à combustion interne (12) passe en dessous d'un seuil prédéfini.

4. Procédé selon l'une des revendications précédentes,
**caractérisé en ce qu'**
on corrige l'énergie potentielle entre le second et le troisième minimum de la vitesse de rotation.

5. Procédé selon l'une des revendications précédentes,
**caractérisé en ce qu'**
on corrige par une impulsion d'énergie de freinage.

6. Procédé selon l'une des revendications précédentes,
**caractérisé en ce qu'**
on détermine la perte d'énergie moyenne entre deux minima successifs et on prédéfinit l'impulsion de correction pour que la valeur absolue de l'énergie potentielle corrigée du moteur à combustion interne (12) au dernier passage du point mort haut corresponde à la moitié de la perte d'énergie moyenne.

7. Procédé selon l'une des revendications précédentes,
**caractérisé en ce qu'**
on saisit la vitesse de rotation du vilebrequin (42) sur l'arbre d'un démarreur-générateur (80, 86) couplé au vilebrequin (42) avec un rapport de démultiplication connu.

8. Procédé selon l'une des revendications précédentes,
**caractérisé en ce que**
l'impulsion de correction se fait par la commande d'un démarreur-générateur (50, 86) ou d'un générateur, couplé au vilebrequin (42) selon un rapport de démultiplication connu.

9. Procédé selon l'une des revendications précédentes,
**caractérisé en ce que**
pour le cylindre qui se trouve en position de fin de mouvement du moteur à combustion interne (12) en phase de compression, on effectue préalablement encore une injection, la soupape d'admission du cylindre concerné étant ouverte.

10. Appareil de commande (36) d'un moteur à combustion interne (12) comportant au moins un capteur de vitesse de rotation (40) pour saisir la vitesse de rotation du vilebrequin (42) du moteur (12) et des moyens pour influencer l'énergie potentielle du moteur (12) à l'arrêt de celui-ci, l'appareil de commande (36) commandant le fonctionnement du moteur (12),
**caractérisé en ce que**
l'appareil de commande (36) commande le moteur à combustion interne (12) selon au moins l'un des procédés des revendications 1 à 9.
